# EUROPÄISCHE PATENTSCHRIFT

(11) **EP 2 017 059 B1**
(45) Veröffentlichungstag und Bekanntmachung des Hinweises auf die Patenterteilung: **01.09.2010**
(21) Anmeldenummer: 08168031.6
(22) Anmeldetag: 08.07.2005
(51) Int. Cl.: B29C 45/33, B29C 45/64, B29C 45/14, B29C 45/16, B29C 45/42

(54) **Spritzgiesswerkzeug und Verfahren zum Spritzen eines Abschnitts eines Formteils**
Injection moulding tool and method for injecting a section of a moulded part
Outil et procédé destinés au moulage par injection d'une section d'une pièce de formage

(30) Priorität: 10.07.2004 DE 102004033461
(43) Veröffentlichungstag der Anmeldung: 21.01.2009
(62) Teilanmeldung aus: 05014892.3
(73) Patentinhaber: ICOS GmbH, 38228 Salzgitter (DE)
(72) Erfinder: Kelpe, Hans-Rudolf, 31249, Hohenhameln (DE); Müller, Michael, 31228, Peine (DE); Mühe, Andreas, 31249, Hohenhameln (DE); Pichler, Ernst, 30827, Garbsen (DE)
(74) Vertreter: Stoffregen, Hans-Herbert

(56) Entgegenhaltungen:
- EP-A- 1 396 329
- FR-A- 1 076 318
- JP-A- 11 320 626
- US-A- 3 358 333
- US-A- 5 422 059

## Beschreibung

Die Erfindung bezieht sich auf ein Spritzgießwerkzeug zum Anspritzen eines Abschnitts an ein Formteil und/oder Umspritzen eines Abschnitts eines Formteils, wie Kraftfahrzeugteil, insbesondere Radlaufschale oder Unterboden, mit einem Düsenteil, das zumindest zwei relativ zueinander verstellbare Formbacken, die in Spritzstellung einen Hohlraum begrenzen, in dem ein Spritzkanal mündet, sowie zumindest ein mit zumindest einer auf dem Düsenteil verstellbar angeordneten Formbacke wechselwirkendes Verriegelungs- oder Schließelement zum Zuhalten der zumindest einen verstellbaren Formbacke in der Spritzstellung umfasst, wobei das zumindest eine Verriegelungs- oder Schließelement von dem Düsenteil ausgeht, zu diesem verstellbar ausgebildet ist und die zumindest eine verstellbare Formbacke in ihrer Spritzstellung verriegelt und eine der Formbacken ein Formkern ist, der stationär von einem Formträger des Düsenteils ausgeht und zu dem Konturkern zumindest eine Formbacke verstellbar angeordnet ist.

Ferner nimmt die Erfindung Bezug auf ein Verfahren zum Anspritzen eines Abschnitts an ein Formteil und/oder Umspritzen eines Abschnitts eines Formteils, wie Kraftfahrzeugteil, insbesondere Radlaufschale oder Unterboden, wobei das Formteil abschnittsweise in einen von relativ zueinander verstellbaren von einem Düsenteil eines Spritzgießwerkzeuges ausgehenden Formbacken umgebenen Hohlraum eingebracht wird, zumindest eine der Formbacken mittels zumindest eines von dem Düsenteil ausgehenden Schließelements durch Verstellen dieses zu der zumindest einen Formbacke in ihrer Spritzstellung verriegelt wird und in den Hohlraum nach Schließen der Formbacken (Spritzstellung) fließfähiges Material gespritzt wird.

Aus der EP-A-1 396 329 ist ein Verfahren und eine Anlage zum Ausbilden eines Ab 1 schnitts eines kastentförmigen Behältnisses bekannt. Das verwendete Spritzgießwerkzeug besteht dabei aus einem Düsenteil und einem Spritzteil, Ober das beim Spritzen die den zu spritzenden Abschnitt des kastenförmigen Behältnisses aufnehmenden Formbacken in der Spritzstellung gehalten werden, um ein Verstellen beim Spritzen auszuschließen.

Der US-A-3,358,333 ist ein Spritzgießwerkzeug zu entnehmen, mit dem Sohlen an einen Schuhschaft gespritzt werden. Hierzu erforderliche Formbacken werden über Kniehebel verstellt und fixiert, die schwenkbar vom Düsenteil des Werkzeugs ausgehen und über Zylinder betätigbar sind, die ihrerseits an den Rahmen des Gießwerkzeuges angelenkt sind.

Ein aus einem Düsenteil und einem Schließteil bestehendes Spritzgießwerkzeug ist der US-A-5,422,059 zu entnehmen. Dabei ist das Schließteil zu dem Düsenteil über einen Hydraulikzylinder verstellbar. Das Schließteil wird entlang von Holmen geführt, die von dem Düsenteil ausgehen.

Ein aus Düsenteil und Schließteil bestehendes Werkzeug ist auch aus der DE-A-199 32 515 bekannt. Mit dem entsprechenden Werkzeug lassen sich Kästen mit stabilen Griffen spritzen.

Bei einem Flaschenkasten aus Kunststoff nach der DE-A-40 22 884 kann auf einem Kernelement eines Griffs ein Außenelement aufgespritzt werden. Die EP-A-1 000 865 sieht ein Umspritzen eines Griffs eines Flaschenkastens vor. Gleiches ist der DE-A-102 08 845 zu entnehmen.

Um ein Spritzgussteil herzustellen, sieht die DE-A-34 46 020 einen von verstellbaren Backen begrenzten Formhohlraum vor, die derart verstellt werden, dass nacheinander unterschiedliche Materialien in den Formhohlraum gespritzt werden können.

Nach der JP-A-01072815 werden Formteil durch Spritzgießen hergestellt, wobei ein Hohlraum von Formbacken begrenzt wird, die durch Klemmen in einer Halterung zusammengehalten werden. Hierzu werden die Formbacken mittels eines Düsenteils in die Halterung hineingedrückt. Die Außenflächen der Formbacken und damit die Innenflächen der Halterung weisen einen Konusverlauf auf.

Zum Spritzgießen von Kunststoffteilen nach der JP-A-2001058339 und JP-A-08066950 werden Formbacken in ihren Randbereichen von zu den Formbacken verstellbaren ringförmigen bzw. klauenförmigen Schließteilen zusammengehalten.

Ein Spritzgießwerkzeug nach der FR-B-1 076 318 ist zum Spritzen von ringförmigen Gegenständen bestimmt. Hierzu sind eine Vielzahl von Ober Kniehebel verstellbaren äußeren Formbacken zu einer geschlossenen eine Ringform bildenden Formbacke verstellbar. Alternativ können die äußeren Formbacken Ober Zylinder verstellt werden.

In der DE.Z.: Plastverarbeiter, Bd. 55, Jahrgang (2004) Nr. 2, Seiten 20-23, ist ein IN-MOULD-LABELLING von Flaschenkästen mittels Spritzgießens zu entnehmen. Das Dokument US 3,358,333 offenbart ein Spritzgießwerkzeug gemäß dem Oberbegriff das Anspruchs 1 und ein Verfahren gemäß dem Oberbegriff des Anspruchs 6.

Der vorliegenden Erfindung liegt das Problem zu Grunde, ein Spritzgießwerkzeug der eingangs genannten Art sowie ein Verfahren derart weiterzubilden, dass bei kompakter Bauart problemlos ein Formteil wie Kasten oder Kraftfahrzeugteil wie Radlaufschale zumindest bereichsweise umspritzt werden kann, um in diesem Bereich gewünschte Materialeigenschaften zu erzielen bzw. das Formteil in einen oder mehreren gewünschten Bereichen geometrisch zu verändern wie zu verlängern. Dabei soll auch ein Einsatz unabhängig vom Ort der Herstellung des Formteils selbst möglich sein.

Erfindungsgemäß wird das Problem im Wesentlichen dadurch gelöst, dass das Verriegelungs- oder Schließelement in Schließstellung der zumindest einen verstellbaren Formbacke formschlüssig in diese eingreift.

Auch sieht eine Lösung ein Verfahren vor zum Anspritzen eines Abschnitts an ein Formteil und/oder Umspritzen eines Abschnitts eines Formteils, wie Kraftfahrzeugteil, insbesondere Radlaufschale oder Unterboden, wobei das Formteil abschnittsweise in einen von relativ zueinander verstellbaren von einem Düsenteil eines Spritzgießwerkzeuges ausgehenden Formbacken umgebenen Hohlraum eingebracht wird, zumindest eine der Formbacken mittels zumindest eines von dem Düsenteil ausgehenden Schließelements durch Verstellen dieses zu der zumindest einen Formbacke in ihrer Spritzstellung verriegelt wird und in den Hohlraum nach Schließen der Formbacken (Spritzstellung) fließfähiges Material gespritzt wird, das sich dadurch auszeichnet, dass das Formteil auf einer der als stationärer auf einen Formträger des Düsenteils angeordneter Formkern ausgebildeten Formbacke angeordnet wird, zumindest eine Formbacke zu dem Formkern zum Ausbilden des Hohlraums verstellt wird und sodann die zumindest eine zu dem Formkern durch formschlüssiges Eingreifen des Verriegelungs- oder Schließelementes verriegelt wird.

Weiterbildungen ergeben sich aus den jeweiligen abhängigen Ansprüchen.

Abweichend von vorbekannten Spritzgießwerkzeugen wird erfindungsgemäß ein solches vorgeschlagen, bei dem kein gesondertes zu dem Düsenteil verstellbares Schließteil erforderlich ist, um die Formbacken während des Spritzens zu sichern, also zuzuhalten. Somit ist das Düsenteil während des Spritzens von einem Schließteil nicht abgedeckt, so dass problemlos ein Abschnitt des Formteils umspritzt bzw. ein Abschnitt an das Formteil angespritzt werden kann. Bei dem Formteil kann es sich z. B. um einen Kasten oder ein Kraftfahrzeugteil wie Radlaufschale oder einen Unterboden handeln, so dass das Formteil in erheblichem Umfang aus dem Werkzeug vorsteht, eine Möglichkeit, die klassische Spritzgießwerkzeuge nicht bieten, bei denen die von dem Düsenteil ausgehenden Formbacken über ein gesondertes zu den Formbacken verstellbares Düsenteil verriegelt werden. Zum Entfernen des hergestellten Spritzgussteils muss das Schließteil zu dem Düsenteil in einem Umfang beabstandet werden, dass das Formteil aus dem Zwischenraum zwischen Düsenteil und Schließteil entfernt werden kann. Hierzu müssen Düsenteil und Schließteil axial derart zueinander beabstandet werden, dass der lichte Abstand größer als Erstreckung des Spritzgussteils in axialer Richtung ist.

Erfindungsgemäß geht von dem Düsenteil selbst das zum Zuhalten des bzw. der Formbacken erforderliche verstellbare Schließelement aus, so dass ein überaus kompaktes Spritzgießwerkzeug zur Verfügung gestellt wird, das folglich ohne großen maschinellen Aufwand dort zum Einsatz gelangen kann, wo z. B. ein Abschnitt eines Formteils wie Kasten umspritzt werden soll. Insbesondere besteht erwähntermaßen der Vorteil, dass das zu umspritzende bzw, anzuspritzende Formteil in erheblichem Umfang über das Düsenteil vorstehen kann.

Der von den Formbacken umgebene Hohlraum zum Umspritzen eines Abschnitts eines Formteils ist des Weiteren derart ausgebildet, dass der Hohlraum zumindest abschnittsweise beabstandet den zu umspritzenden Abschnitt umgibt. Gegebenenfalls kann der Hohlraum auch umlaufend den Abschnitt beabstandet umgeben.

Soll ein Abschnitt an ein Formteil angespritzt werden, so ist die Erstreckung des Bereichs des Formteils innerhalb des Hohlraums, an den der Abschnitt angespritzt werden soll, häufig erheblich kleiner als der verbleibende Raum, in den das schmelzflüssige Material gespritzt wird.

Insbesondere ist vorgesehen, dass von dem Formträger des Düsenteils ein eine stationäre Formbacke bildender Konturkern ausgeht, dass zu dem Konturkern zumindest eine Formbacke vorzugsweise über einen ersten mit dem Formträger verbundenen Druckzylinder verstellbar angeordnet ist, dass von dem Formträger das zumindest eine vorzugsweise über einen mit dem Formträger verbundenen zweiten Druckzylinder verstellbares Verriegelungselement ausgeht, das in Schließstellung der Konturbacke formschlüssig mit der Formbacke verbunden ist und vorzugsweise in eine Ausnehmung der Formbacke eingreift. Dabei kann der Verstellweg der Formbacke quer, insbesondere senkrecht zum Verstellweg des Verriegelungselementes verlaufen

Durch die erfindungsgemäße Lehre besteht mit konstruktiv einfachen Maßnahmen die Möglichkeit, auch an großen Formteilen Abschnitte anzuspritzen bzw. Abschnitte des Formteils selbst zu umspritzten. Dabei kann das an- bzw. zu umspritzende Formteil auf einen als stationäre Formbacke zu bezeichnenden Konturkern positioniert werden, zu dem mehrere Formbacken verstellbar sind, die ihrerseits in Schließstellung zusammen einen Formhohlraum außenseitig verschließen.

So können die verstellbaren Formbacken sternförmig um einen Konturkern angeordnet werden, wobei die Formbacken in Schließstellung bündig in dem Bereich ineinander übergehen, in dem der Formhohlraum begrenzt wird.

Das Verstellen der Konturbacken kann dabei über Druck- wie Hydraulikzylinder erfolgen, die von dem Düsenteil, d. h. dessen Formträger ausgehen.

Um die Formbacken in der Spritzstellung zu verriegeln, ist jeder Formbacke ein Verriegelungselement zugeordnet, das insbesondere formschlüssig in eine Ausnehmung der Formbacke eingreift. Dabei verlaufen Verstellweg einer jeden Formbacke zum Verstellweg des zugeordneten Verriegelungselementes vorzugsweise senkrecht zueinander. Der Verstellweg der Formbacke kann dabei parallel zur von dem Formträger aufgespannten Ebene verlaufen, wohingegen der Verstellweg des Verriegelungselementes sich senkrecht zu der Ebene erstreckt. Insbesondere ist das Verriegelungselement mit dem diesen verstellbaren Druckzylinder in den Formträger eingelassen.

Unter Eingreifen in die Formbacken ist auch ein Wechselwirken mit dem Kolben oder einem sonstigen mit der Formbacke mitbewegbares Element zu verstehen.

Des Weiteren bezieht sich die Erfindung auf ein Verfahren zum Anspritzen eines Abschnitts an ein Formteil und/oder Umspritzen eines Abschnitts eines Formteils durch Spritzgießen, wobei das Formteil abschnittsweise in einen von zueinander verstellbaren von einem Düsenteil eines Spritzgießwerkzeuges ausgehenden und relativ zueinander verstellbaren Formbacken umgebenen Hohlraum eingebracht wird, in den nach Schließen der Formbacken (Spritzstellung) fließfähiges Material gespritzt wird, wobei, zumindest eine der Formbacken mittels zumindest eines von dem Düsenteil ausgehendes Schließelement durch Verstellen dieses zu der zumindest einen Formbacke in ihrer Spritzstellung verriegelt wird, wobei insbesondere vorgesehen ist, dass die Formbacken mittels von dem Düsenteil ausgehender Schließelemente durch Verstellen dieser zu den Formbacken durch Selbsthemmung in ihrer Spritzstellung gehalten werden.

Die Figuren zeigen:
- Fig. 1: eine Seitenansicht einer Anordnung zum Umspritzen eines Abschnitts eines Formteils bzw. Anspritzen eines Abschnitts an ein Formteil.
- Fig. 2: eine Draufsicht auf eine Anlage zum Umspritzen bzw. Anspritzen von Abschnitten von bzw. an Formteilen,
- Fig. 3: einen Ausschnitt aus einer Anlage zum Umspritzen bzw. Anspritzen von Abschnitten von bzw. an Formteilen in Form von Kästen,
- Fig. 4: die Handhabungseinrichtung gemäß Fig. 3 mit auf ein Spritzgießwerk- zeug ausgerichtetem Formteil,
- Fig. 5: das Formteil gemäß Fig. 4 bei in das Spritzgießwerkzeug eingebrachter Position,
- Fig. 6: das Formteil gemäß Fig. 4 und 5 nach Umspritzen bzw. Anspritzen und Entfernen aus dem Spritzgießwerkzeug.
- Fig. 7: einen Ausschnitt eines Spritzgießwerkzeuges zum Umspritzen einer In- nenwandung eines Formteils.
- Fig. 8: einen Ausschnitt eines Spritzgießwerkzeuges zum Umspritzen eines Mit- telhandgriffs eines Formteils,
- Fig. 9: einen Ausschnitt eines Spritzgießwerkzeuges zum Umspritzen von Au- ßenhandgriffen eines Formteils,
- Fig. 10: einen Ausschnitt einer weiteren Ausführungsform eines Spritzgießwerk- zeuges,
- Fig. 11: einen Ausschnitt aus der Anordnung gemäß Fig. 10,
- Fig. 12: eine weitere Ausführungsform einer Anordnung zum Spritzen eines Formteils sowie zum Umspritzen eines Abschnitts des Formteils,
- Fig. 13: einen Ausschnitt aus einer Anlage zum Umspritzen eines Mittelhand- griffs eines Formteils,
- Fig. 14: eine perspektivische Darstellung eines Ausschnitts des Werkzeugs gemäß Fig. 13,
- Fig. 15: eine Draufsicht auf einen Ausschnitt eines Düsenteils mit an- bzw. umzu- spritzenden Formteil,
- Fig. 16: eine perspektivische Darstellung des Düsenteils gemäß Fig. 15,
- Fig. 17: einen Schnitt durch das Düsenteil gemäß Fig. 15 bzw. 16,
- Fig. 18: einen Ausschnitt aus dem Düsenteil gemäß Fig. 17 und
- Fig. 19: die Darstellung gemäß Fig. 17 bei geöffnetem Werkzeug.

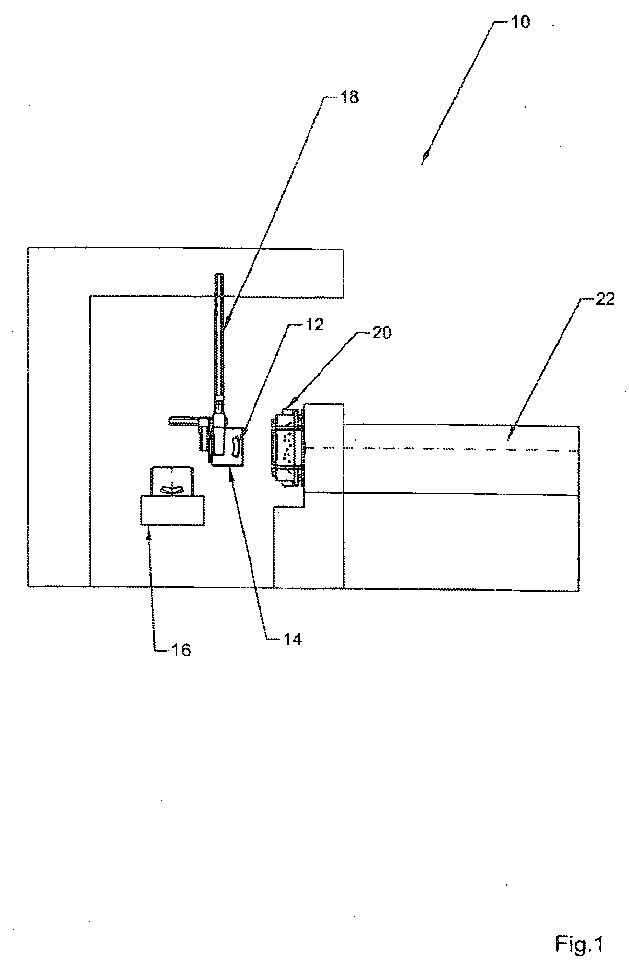

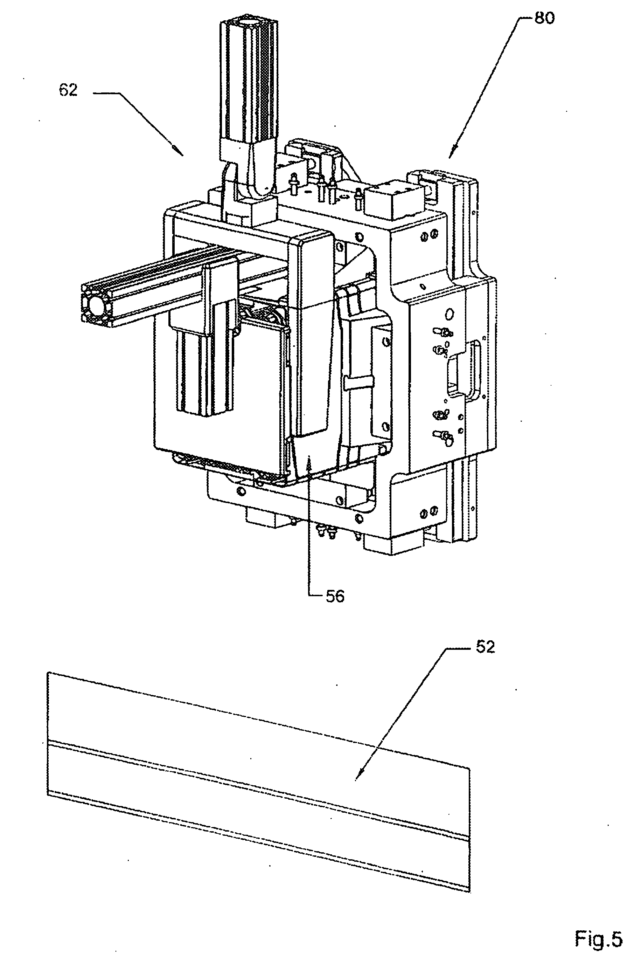

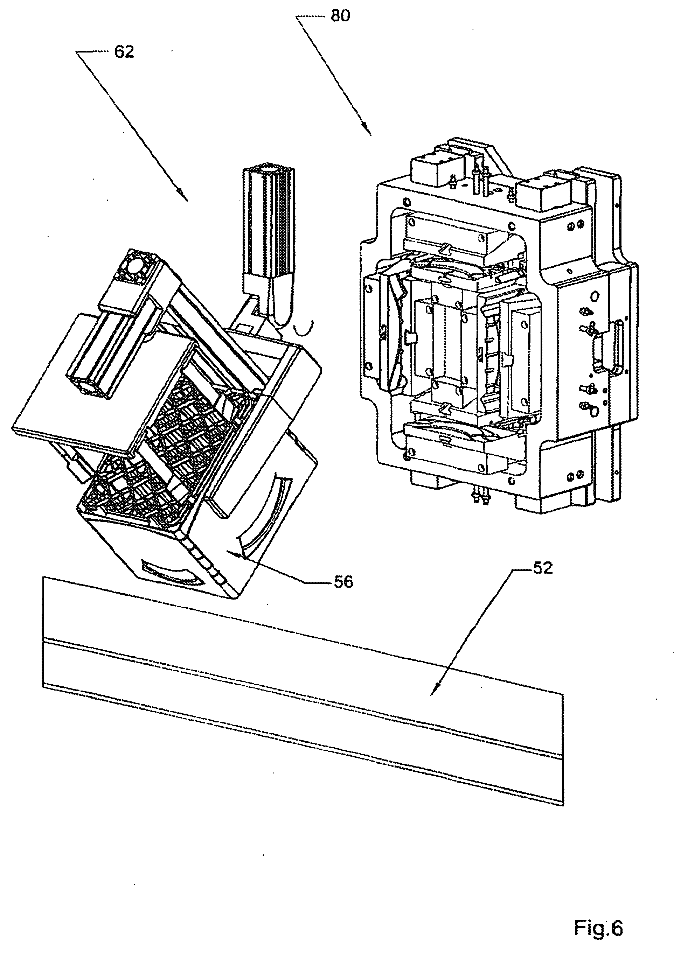

Anhand der nachfolgenden Beschreibung der Figuren 1 bis 14 sollen bevorzugte Ausgestaltungen bzw. Anordnungen und Ausschnitte von Anlagen zum Spritzen von Formteilen bzw. zum Umspritzen von Abschnitten von Formteilen bzw. Anspritzen von Abschnitten von Formteilen erläutert werden. Die Figuren 1-14 beschreiben Vorrichtungen und Verfahren, die zu diesen Erfindung nicht gehöhren. Dabei wird aus Gründen der Vereinfachung von einem Flaschenkasten als Formteil ausgegangen

Als Formteile kommen insbesondere Kunststoffteile der Kraftfahrzeugindustrie wie Radlaufschalen oder Kraftfahrzeugunterbodenverkleidungen in Frage, um nur beispielhaft einige Gegenstände zu nennen.

Auch wird nachstehend das Umspritzen eines Griffs eines Flaschenkastens erläutert.

Der Fig. 1 ist ein Ausschnitt einer Anlage 10 zum Umspritzen eines Griffs 12 eines Kastens 14 zu entnehmen, der entlang einer Transportbahn 16, die durch ein Förderband gebildet sein kann, transportiert und sodann mittels einer Handhabungseinrichtung 18 in ein Spritzgießwerkzeug 20 eingesetzt wird, in dem der Griff 12 umspritzt wird.

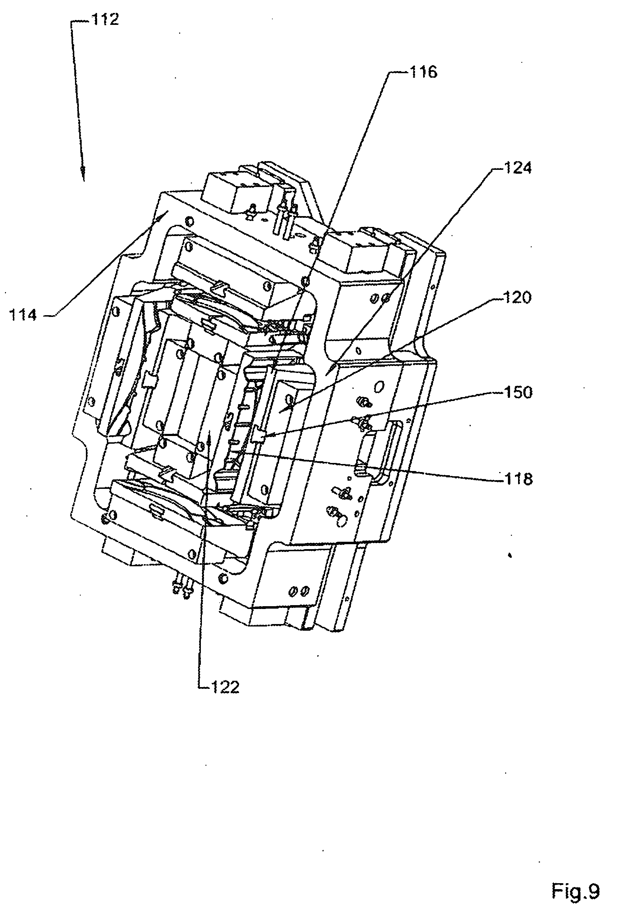

Bei dem Griff 12 kann es sich um einen solchen handeln, der in einer Seitenwandung des Kastens 14 vorhanden ist, aber auch um einen Mittelhandgriff handeln, wie dies beispielhaft im Zusammenhang mit den Fig. 9, 13 und 14 erläutert wird.

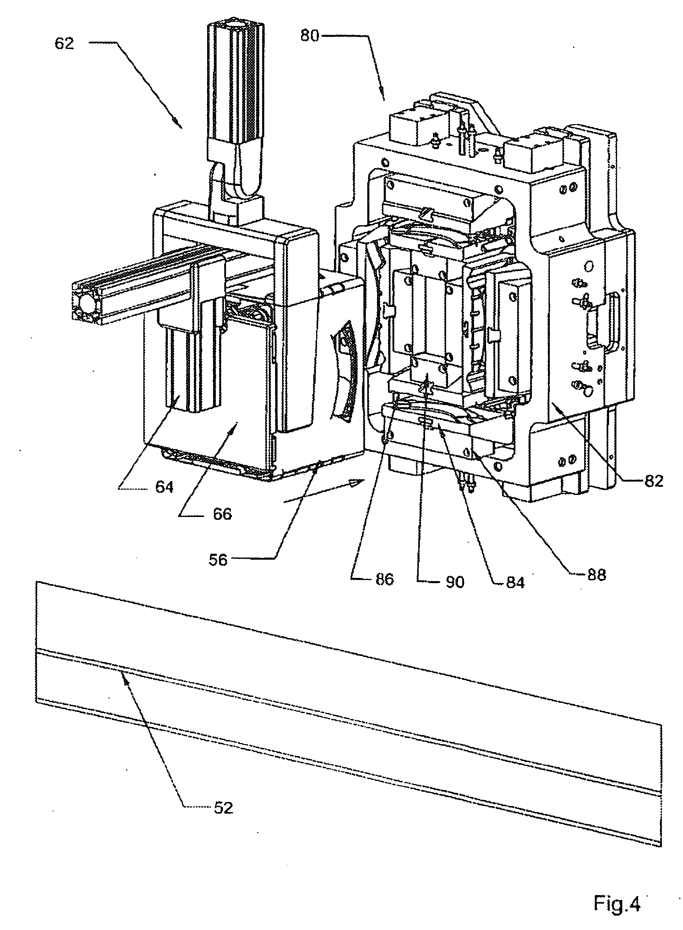

Das Spritzgießwerkzeug 20 ist mit einem Extruder 22 verbunden, über den in bekannter Weise fließfähiger thermoplastischer Kunststoff dem Spritzgießwerkzeug 20 bzw. in diesem vorhandenen Düsen zugeführt wird. Dabei besteht erfindungsgemäß das Spritzgießwerkzeug 20 allein aus einem Düsenteil, ohne dass das nach dem Stand der Technik erforderliche gesonderte Schließteil erforderlich ist. Somit wird die Zuhaltung von Formbacken, die einen Hohlraum begrenzen, in dem ein Abschnitt des Kastens, also im Ausführungsbeispiel ein Griff eingebracht wird, um sodann umspritzt zu werden, über Elemente realisiert, die vom Düsenteil selbst ausgehen. Dies wird an Hand der Fig. 4 bis 14 näher erläutert.

Die Einheit bestehend aus dem Spritzgießwerkzeug 20 und dem Extruder 22 kann hierdurch kompakt aufgebaut werden, so dass ein Einsatz an gewünschten Orten problemlos erfolgen kann, es also nicht zwingend erforderlich ist, dass das Spritzgießwerkzeug 20 dort zum Einsatz gelangt, wo der Kasten selbst gespritzt wird.

Hierdurch besteht die Möglichkeit, dass zum Beispiel Kästen in einer Flaschenabfüllanlage, von der aus die Flaschen in die Kästen eingesetzt werden, umspritzt werden können, so dass auch ein nachträgliches Umspritzen von bereits im Einsatz befindlichen Kästen möglich ist.

Insbesondere ist hierdurch die Möglichkeit gegeben, dass das zu umspritzende bzw. anzuspritzende Formteil in erheblichem Umfang über das Düsenteil vorstehen kann, da eine Behinderung durch ein Schließteil nicht gegeben ist. Auch kann ein problemloses Entfernen des Formteils aus dem Spritzgießwerkzeug 20 erfolgen, da erwähntermaßen ein Schließteil nicht zuvor von dem Düsenteil beabstandet werden muss, um das Formteil aus dem Spritzgießwerkzeug herausnehmen zu können.

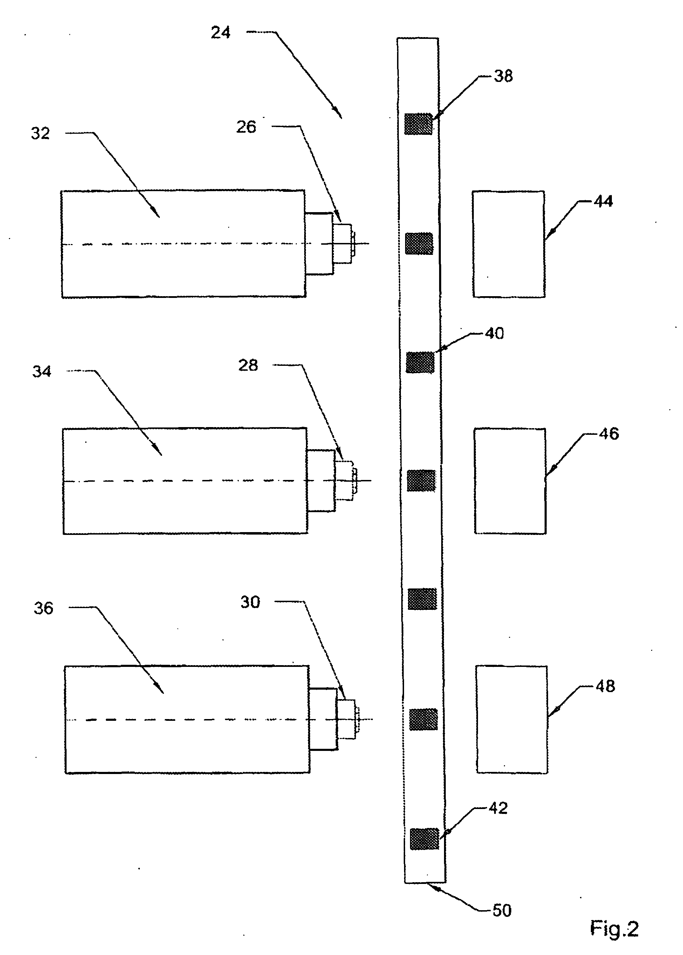

Der Fig. 2 ist eine Draufsicht auf eine Anlage 24 zu entnehmen, die mehrere Spritzgießwerkzeuge 26, 28, 30 mit zugeordneten Extrudern 32, 34, 36 umfasst, mit denen Kästen 38, 40, 42 im erforderlichen Umfang umspritzt werden sollen. Über Handhabungseinrichtungen 44, 46, 48 werden die Kästen 38, 40, 42 in die Werkzeuge 26, 28, 30 eingesetzt bzw. diesen entnommen. Hierzu werden die Kästen 38, 40, 42,über ein Förderband 50 in die erforderliche Position zwischen der jeweiligen Handhabungseinrichtung 44, 46, 48 und dem zugeordneten Werkzeug 26, 28, 30 bewegt.

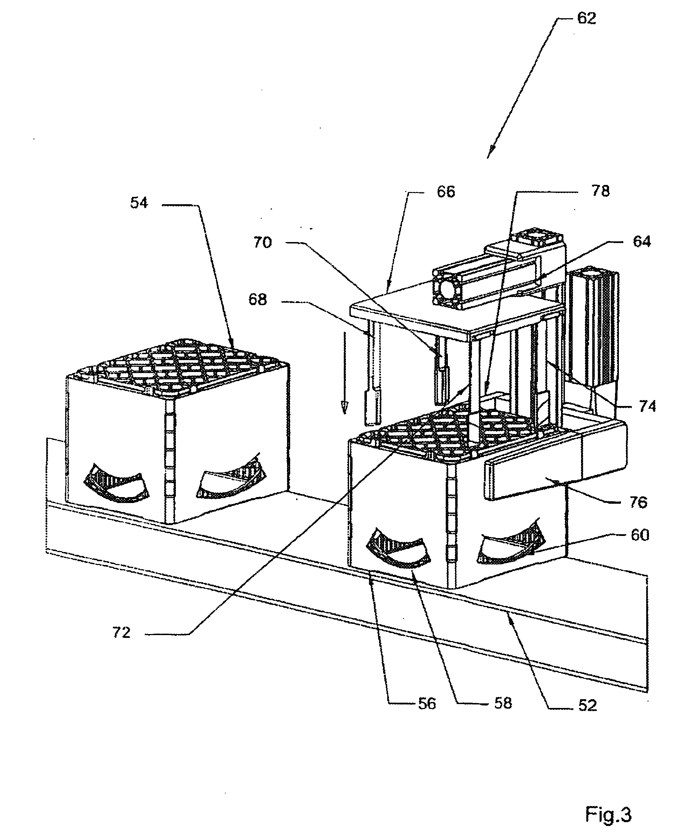

Der Fig. 3 ist ein Detail der Anlage 10 bzw. 24 zu entnehmen. Man erkennt auf einem Förderband 52 angeordnete Kästen 54, 56, die umspritzt werden sollen. Dabei können die Außengriffe 58, 60, nicht dargestellte Mittelhandgriffe oder auch Wandabschnitte wie insbesondere Innenwandabschnitte umspritzt werden.

Damit der jeweilige Kasten 54, 56 in ein Spritzgießwerkzeug eingesetzt wird, ist eine Handhabungseinrichtung 62 vorgesehen, die von einem verschwenkbaren Arm 64 ausgehend eine Basisplatte 66 mit von diesem ausgehende Stützholmen 68, 70, 72, 74 umfasst, die in die Eckholme des Kastens einsetzbar sind. Ferner weist die Handhabungseinrichtung 62 zueinander verstellbare Seitenarme 76, 78 auf, um den Kasten 56 seitlich zu erfassen.

Sobald die Holme 68, 72, 74 in die Eckholme des Kastens 56 eingefahren sind, wird der Arm 64 derart verschwenkt, dass der Kasten 56 mit seiner offenen Seite auf ein Werkzeug 80 ausgerichtet und in dieses eingesetzt wird. Das Werkzeug 80 weist weitgehend einen klassischen Aufbau mit einem Formenträger 82 sowie Formbacken auf, zwischen denen ein Abschnitt des Kastens 46 einbringbar ist, um bereichsweise den zu umspritzenden Abschnitt von einem Hohlraum zu umgehen, in den zum Umspritzen fließfähiger thermoplastischer Kunststoff über eine nicht dargestellte Düse eingespritzt wird. Rein beispielhaft werden zwei entsprechende Formbacken in Fig. 4 mit dem Bezugszeichen 84, 86 gekennzeichnet.

Um die Formbacken 84, 86 zu schließen und zuzuhalten bzw. zu öffnen, also voneinander weg zu bewegen, wirken die Formbacken 84, 86 mit Verriegelungskeilen 88, 90 zusammen, über die Formbacken 84, 86 in der Spritzstellung zugehalten werden.

Der Formenträger 82 mit den Formbacken 84, 86 und den Verriegelungskeilen 88, 90 sowie die in dem Formenträger 82 vorhandenen, jedoch nicht näher bezeichneten bzw. dargestellten Düsen stellen folglich das Düsenteil des Werkzeugs 80 dar.

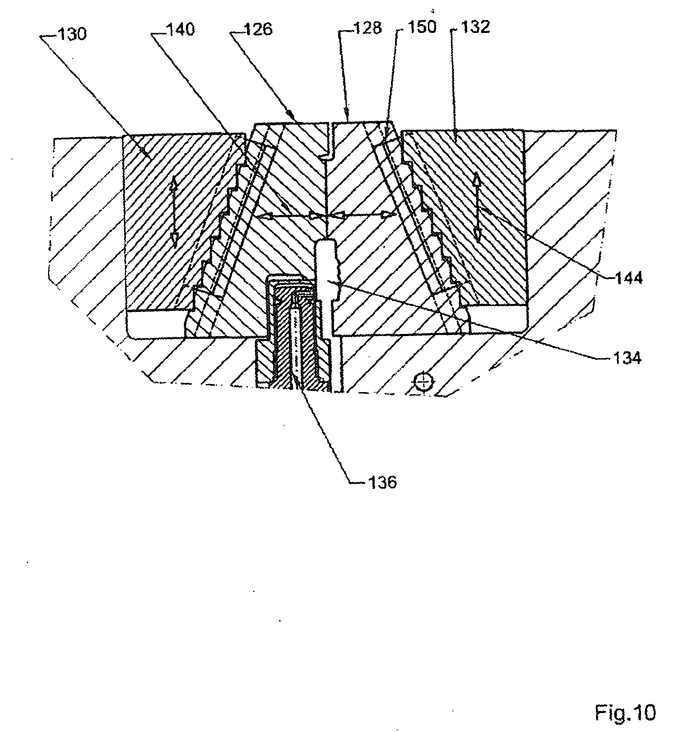

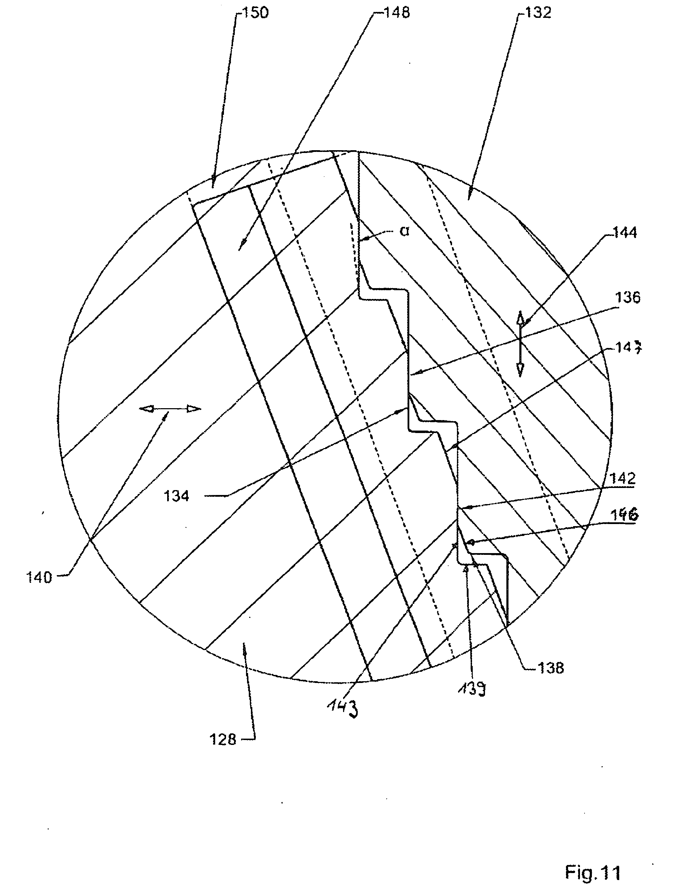

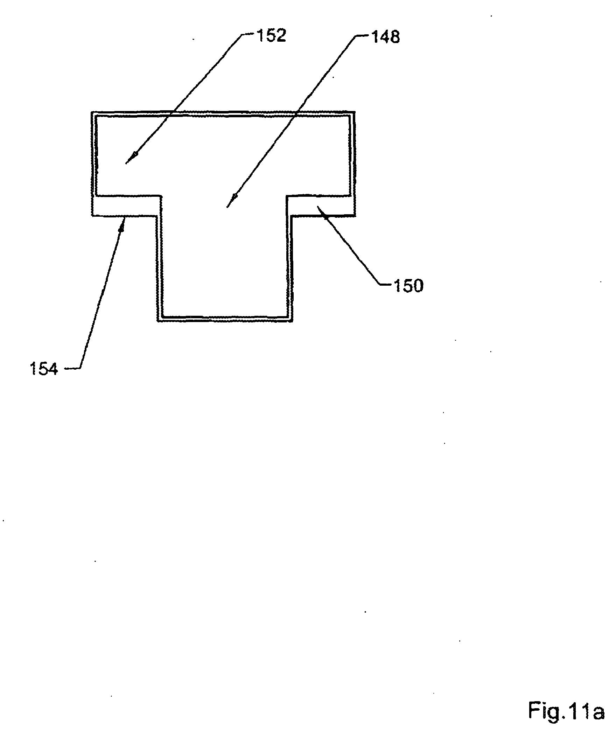

Ist nach dem Stand der Technik dem Düsenteil ein Schließteil zugeordnet, über das die Verriegelungskeile 88, 90 verriegelt werden, so ist erfindungsgemäß vorgesehen, dass ein Verriegeln ohne ein Schließteil erfolgt, wodurch sich eine überaus kompakte Baueinheit für das Werkzeug 80 ergibt. Das Verriegeln oder besser gesagt das Zuhalten der Formbacken 84, 86 wird dabei technisch dadurch realisiert, dass die Verriegelungskeile 88, 90 in der Spritzstellung, also bei geschlossenen Formbacken 84, 86 selbsthemmend außenseitig an den Formbacken 84, 86 anliegen, wie im Zusammenhang mit den Figuren 10 und 11 näher erläutert wird.

Nach Umspritzen des oder der Abschnitte des Kastens 56 und nach Öffnen der Formbacken 84, 86, also Auseinanderfahren dieser durch Verstellen der Verriegelungskeile 88, 90 senkrecht zu der von dem Formenträger 82 aufgespannten Ebene wird der Kasten 56 aus dem Werkzeug 80 über die Handhabungseinrichtung 62 entnommen, die die Funktion der Auswerfereinheit übernimmt. Sodann wird der Kasten 56 auf das Förderband 52 zurückgestellt, um anschließend den nachfolgenden Kasten, also gemäß der Darstellung in Fig. 3 den Kasten 54 in das Werkzeug 80 einzusetzen.

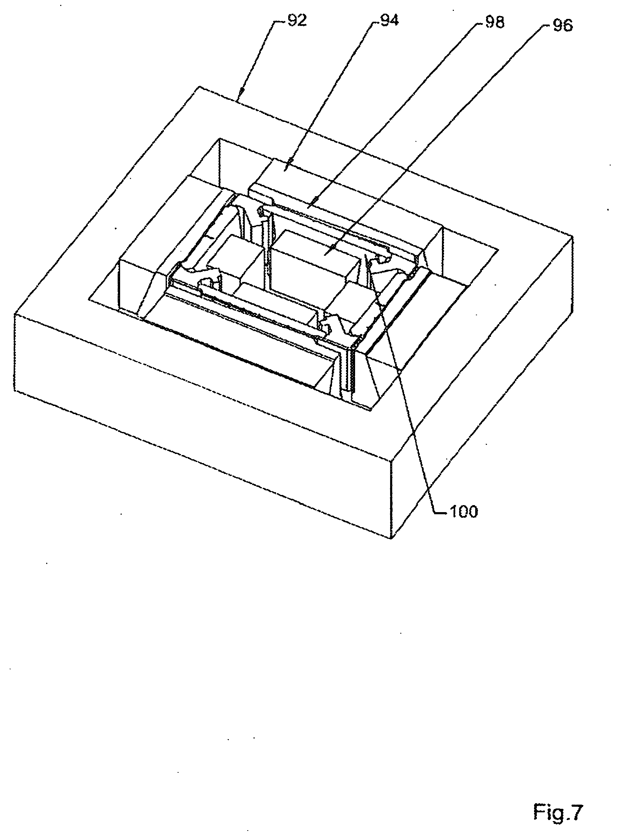

Der Fig. 7 ist in Prinzipdarstellung ein Ausschnitt eines Spritzgießwerkzeuges zu entnehmen, um Innenwandbereiche von Kästen zu umspritzen. Hierzu gehen von einem Formenträger 92 entsprechend der prinzipiellen Erläuterungen gemäß der Fig. 4 Formbacken und zugeordnete Verriegelungskeile aus, die beispielhaft mit den Bezugszeichen 94, 96 für die Formbacken und 98, 100 für die Verriegelungskeile bezeichnet sind. Die Formbacken 94, 96 wirken in Spritzstellung, also bei geschlossener Form, selbsthemmend mit den zugeordneten Verriegelungskeilen 98, 100 zusammen, so dass eine Verriegelung ausschließlich über das Düsenteil des Spritzgießwerkzeuges erfolgt, ohne dass es eines Schließteils bedarf.

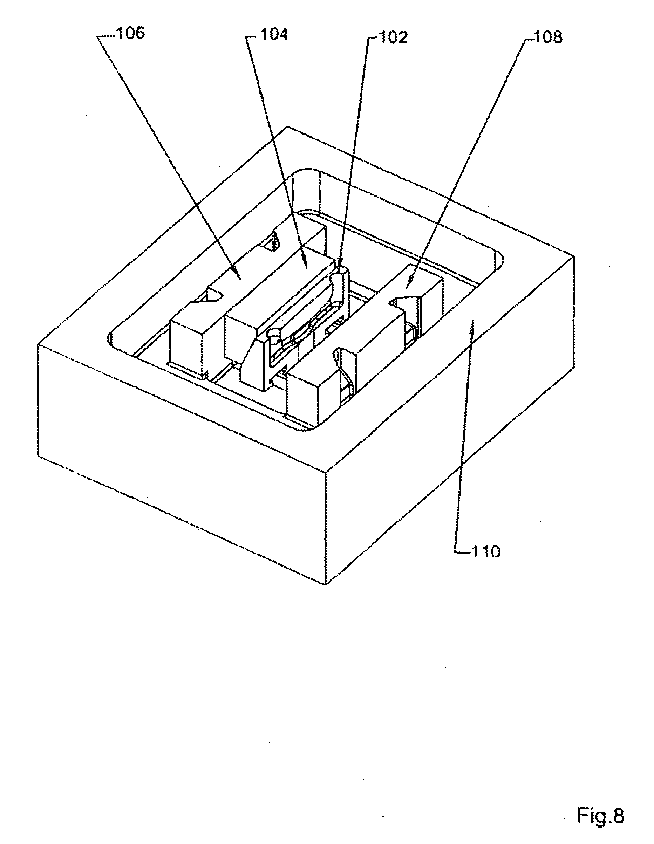

In Fig. 8 ist ein Ausschnitt eines Werkzeuges dargestellt, mit dem ein Mittelhandgriff eines Kastens umspritzt wird. Dabei sind allein zwei Formbacken 102 und diesen zugeordneten Verriegelungskeilen 104 erforderlich, die ihrerseits entlang von Führungsböcken 106, 108 verstellbar sind, um die erforderliche Bewegung senkrecht zur von einem die Formbacken 102 und die Verriegelungskeile 104 aufnehmenden Formenträger 110 aufgespannten Ebene zum Öffnen bzw. Schließen und Zuhalten der Formbacken 102 verstellen zu können.

In der Fig. 9 ist rein prinzipiell ein Werkzeug 112 dargestellt, das ebenfalls ausschließlich ein Düsenteil umfasst, in dem in den Seitenwandungen eines Kastens vorhandene Griffe umspritzt werden sollen. Das Werkzeug 112, also das Düsenteil, umfasst einen Formenträger 114 mit senkrecht zu der vor diesem aufgespannten Ebene verstellbaren Verriegelungskeilen, über die die Handgriffe bzw. sich an diese anschließende Bereiche des Kastens aufnehmenden Formbacken verstellbar sind.

Beispielhaft sind zwei einander zugeordnete Formbacken mit den Bezugszeichen 116, 118 und die entsprechenden diese führenden und zuhaltenden Verriegelungskeile mit den Bezugszeichen 120, 122 gekennzeichnet. Die Führung der Verriegelungskeile 120 übernimmt dabei ein Außenwandabschnitt des Formenträgers, also in Bezug auf den Verriegelungskeil 120 der rechte Wandabschnitt 124 des Formenträgers 114. Die inneren Verriegelungskeile 122 werden über nicht dargestellte Führungsbalken geführt, die auch Abschnitte der Bodenwandung des Formenträgers 114 sein können.

Um ohne Schließteil die Formbacken in Spritzstellung zuzuhalten, ist erfindungsgemäß ein selbsthemmendes Anliegen der Verriegelungskeile an den Formbacken gegeben, wie dies prinzipiell anhand der Fig. 10 und 11 erläutert werden soll. Andere technische Realisierungsmöglichkeiten zur Erreichung einer Selbsthemmung sind selbstverständlich gleichfalls möglich.

In der Fig. 10 ist ein Ausschnitt eines Düsenteils eines Spritzgießwerkzeuges dargestellt. Man erkennt zwei zueinander verstellbare Formbacken 126, 128 und diesen zugeordnete Verriegelungskeile 130, 132. Die Bewegungsrichtungen von den Formbacken 126, 128 bzw. den Verriegelungskeilen 130, 132 sind durch die Doppelpfeile symbolisiert. In Schließstellung, der der Fig. 10 zu entnehmen ist, liegen die Formbacken 126, 128 über eine innere Fläche aufeinander und umschließen einen Hohlraum 134, in dem ein zu umspritzender Abschnitt des Kastens 54, 56 eingebracht wird, und zwar im Ausführungsbeispiel der Fig. 10 ein Seitenhandgriff. Dabei umgibt der Hohlraum 134 den Seitenhandgriff bereichsweise beabstandet, um so verbliebenen Hohlraum mit dem über eine Düse 136 zuzuführenden thermoplastischen Kunststoff zu umspritzen. Hierbei handelt es sich insbesondere um ein im Vergleich zu dem Material des Kastens weicheres Material, um angenehme Trageigenschaften zu erzielen.

Um beim Spritzen sicherzustellen, dass die Formbacken 126, 128 nicht auseinandergedrückt werden, also die Formbacken 126, 128 verriegelt oder zugehalten werden, liegen die Verriegelungskeile 130, 132 selbsthemmend an den Außenflächen der Formbacken 126, 128 an. Dies ist dem Ausschnitt der Fig. 11 näher zu entnehmen.

In Fig. 11 ist ein Abschnitt der in Fig. 10 rechts dargestellten Formbacke 128 und des dieser zugeordneten Verriegelungskeils 132 dargestellt. Die Formbacke 128 und der Verriegelungskeil 132 liegen in Schließstellung über Flächen 134 und 136 selbsthemmend aufeinander, so dass beim Einspritzen des Kunststoffmaterials ein Auseinanderdrücken der Formbacken 126, 128 verhindert wird, ohne dass ein gesondertes Schließteil - wie bei üblichen Spritzgießwerkzeugen - erforderlich ist.

Um die Selbsthemmung zu realisieren, weisen die Begrenzungsflächen 134, 136 eine Art Sägezahnstruktur auf. Diese kann durch aufeinander folgende Bereiche von ersten, zweiten und dritten Abschnitten realisiert werden. So verläuft ein erster Abschnitt 138 entlang Verstellrichtung (Doppelpfeil 140) der Formbacke 128. Ein zweiter Abschnitt 142 erstreckt sich entlang Verstellrichtung (Doppelpfeil 144) des Verriegelungskeils 132. Zwischen dem ersten Abschnitt 138 und dem zweiten Abschnitt 142 verläuft ein dritter Abschnitt 146, der sich entlang einer Ebene erstreckt, die von der jeweiligen Fläche 134 bzw. 136 des Verriegelungskeils 32 bzw. der Formbacke 128 im Mittel aufgespannt wird, also dem Gesamtverlauf der Fläche 134 bzw. 136 entspricht. Es schließt sich sodann Bereiche mit entsprechenden Abschnitten 138, 142, 146 an, um die Zahnstruktur der Fläche 136 zu bilden.

Eine entsprechende Struktur weist die Fläche 134 der Formbacke 128 auf, wobei jedoch bei aufeinander liegenden Flächen 134, 136 die ersten Abschnitte 138, 139 und die dritten Abschnitte 146, 147 zueinander beabstandet verlaufen. Die zweiten Abschnitte 142, 143 liegen demgegenüber abschnittsweise aufeinander. Hierdurch wird in Schließstellung durch die zweiten Abschnitte 142, 143 eine Selbsthemmung erzielt, wobei der zweite Abschnitt 142, 143 nicht zwingend parallel zur Verstellrichtung 144 des Verriegelungskeils 132 verlaufen muss, sondern zu dieser einen Winkel α einschließen kann, der jedoch kleiner als 6°, insbesondere im Bereich zwischen 5 und 6° liegen sollte.

Der Verriegelungskeil 132 - und somit auch der Verriegelungskeil 130 - bewirkt nicht nur das Zuhalten der Formbacken 126, 128, sondern auch deren Bewegung, also das Auseinanderfahren (Doppelpfeil 140). Um dies ungeachtet der zu realisierenden Selbsthemmung zu ermöglichen, greift der Verriegelungskeil 132 mit einem im Schnitt T-förmigen Mitnehmer 148 in eine entsprechende im Schnitt T-förmige Ausnehmun 150 der Formbacke 128 ein, wie dem Ausschnitt in Fig. 11a zu entnehmen ist. Dabei ist der entlang der Flächen 134, 136 verlaufende T-förmige Mitnehmer 148 mit Spiel in der Aufnahme 150 angeordnet, so dass zum Öffnen des Werkzeuges zunächst ein Verstellen der Verriegelungskeile 130, 132 in Richtung des Doppelpfeils 144 erfolgt, ohne dass die Formbacken 126, 128 unmittelbar mitgenommen werden. Erst wenn der Mitnehmer 148 mit seinem Querschenkel 152 an zugeordneter verriegelungskeilseitig verlaufender Innenfläche 154 der Ausnehmung 150 anliegt, werden die Formbacken 126, 128 entlang des Doppelpfeils 140 bewegt, wodurch die Form geöffnet und somit der Kasten bzw. der umspritzte Handgriff entnommen werden kann. Dabei ist der Mitnehmer 148 leistenförmig ausgebildet und erstreckt sich parallel entlang der aus den Abschnitten 138, 139, 142, 143, 146, 147 gemittelten Flächen 134, 136.

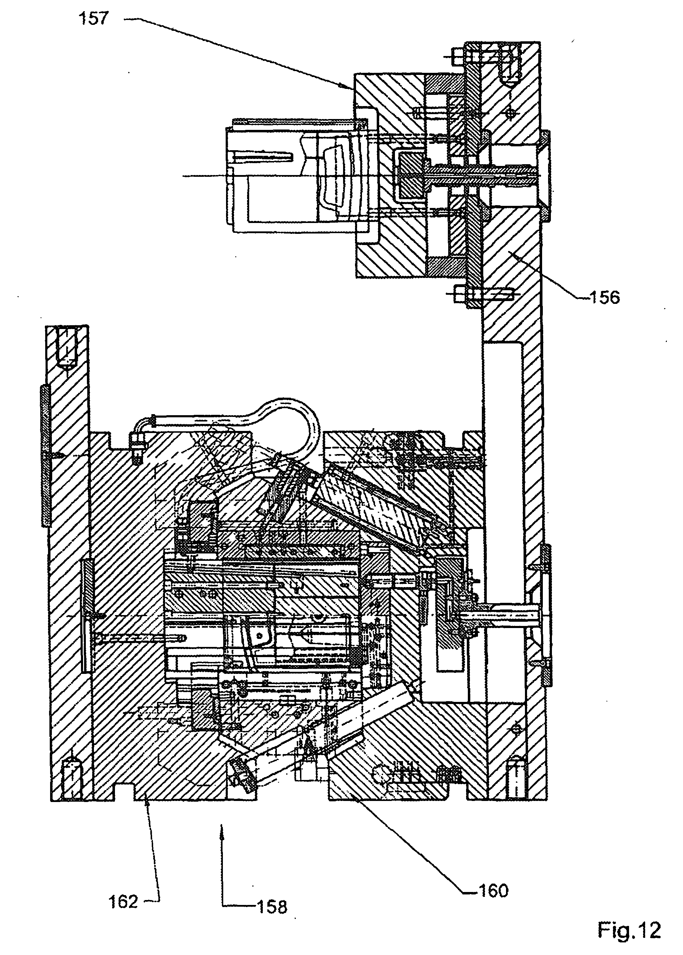

Anhand der Fig. 12 soll eine weitere Ausgestaltung erläuten werden. So geht von einer Halterplatte 156 nicht nur ein Werkzeug aus, wie dies zuvor erläutert worden ist, um einen Abschnitt eines Kastens zu umspritzen, sondern zusätzlich ist ein zweites Spritzgießwerkzeug 158 bestehend aus einem Düsenteil 160 und einem Schließteil 162 vorhanden, mit dem der Kasten selbst gespritzt wird. Nach dem Spritzen des Kastens und dem Öffnen des Werkzeuges wird der Kasten mittels einer nicht dargestellten Handhabungseinrichtung in das Werkzeug 157 eingesetzt, um zum Beispiel einen Mittelhandgriff zu umspritzen. Das zweite Werkzeug 158 kann dabei eine übliche Konstruktion aufweisen, um Kästen zu spritzen, so dass es eines weiteren Eingehens nicht bedarf.

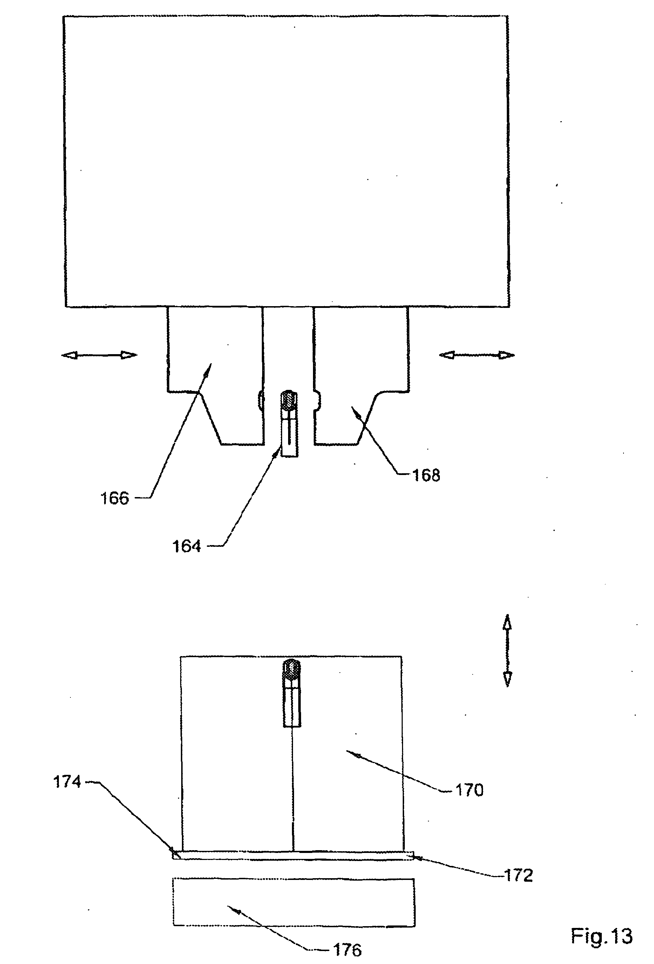

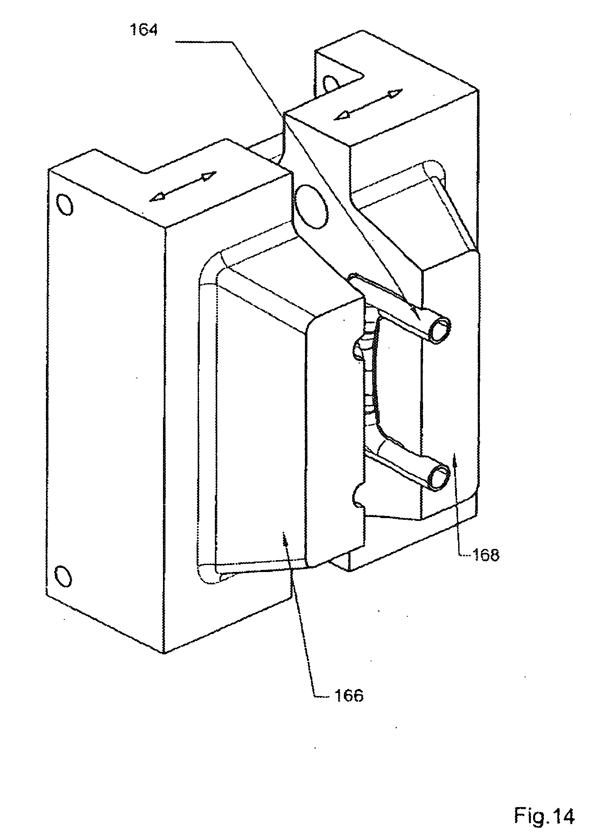

Zu den Fig. 13 und 14 ist anzumerken, dass diesen Varianten zu entnehmen sind, um einen Mittelhandgriff 164 eines Kastens zu umspritzen. Abweichend von den Ausführungsbeispielen der Fig. 1 - 12 sind die den Mittelhandgriff 164 umgebenden Formbacken 166, 168 nicht über Vewiegelungskeile geführt und werden durch diese zugehalten. Vielmehr erfolgt dies über nicht näher dargestellte Verriegelungseinheiten, die hydraulisch betätigt werden können. Allerdings ist Verriegelungseinheit ebenfalls im Düsenteil des Werkzeuges vorhanden, so dass sich ein Schließteil erübrigt.

Um den den Mittelhandgriff 164 aufweisenden Kasten 170 in das Werkzeug, also zwischen die Formbacken 164, 168 einzubringen, ist entsprechend der Fig. 13 eine Hubeinrichtung 172 vorgesehen, über die der Kasten 170 angehoben bzw. abgesenkt wird. Die Hubeinrichtung 172 umfasst dabei einen plattenförmigen Abschnitt 174, auf der der Kasten 170 positioniert ist. Die Hubeinrichtung 172 verläuft dabei zwischen zueinander beabstandet endenden Förderbändern, wobei der Abschnitt 174 den Zwischenraum bei abgesenktem Kasten 170 verschließt. Hierdurch ist die Möglichkeit gegeben, dass der Kasten 170 von der Platte 174 auf ein angrenzendes Förderband durch den Zutransport von Kästen des anderen Förderbandes übergeben wird.

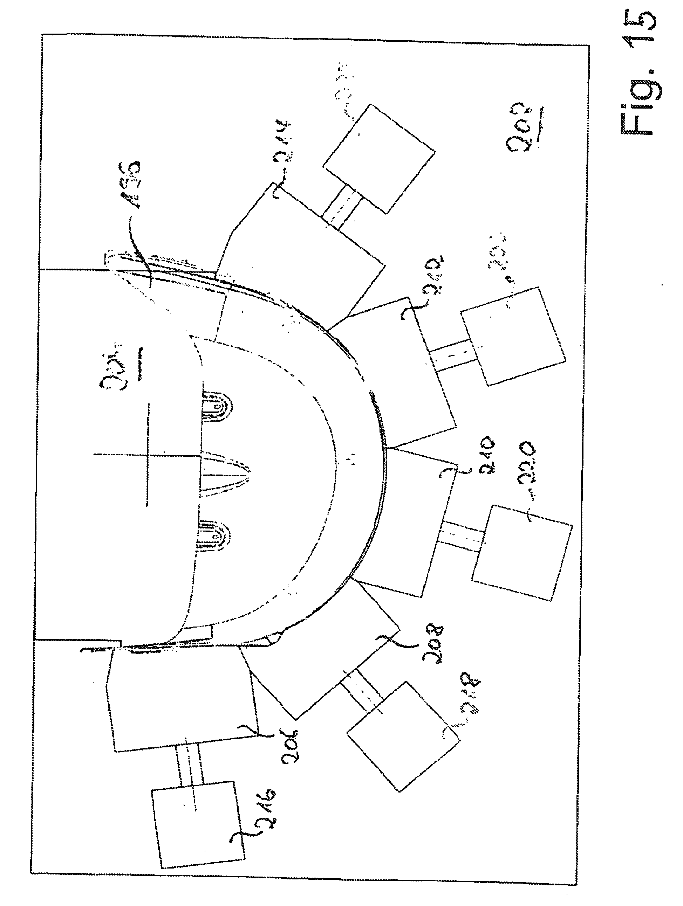

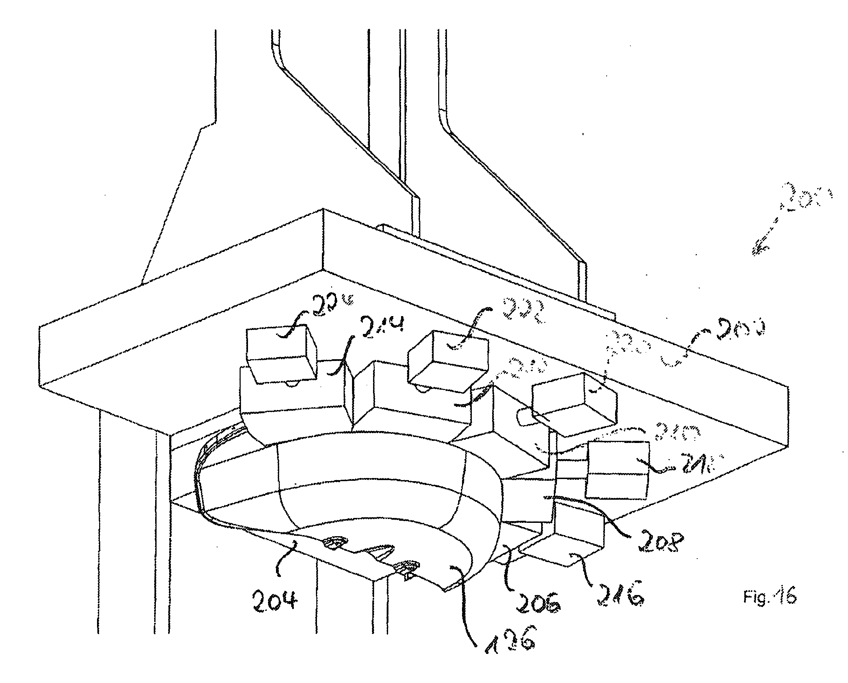

Anhand der Fig. 15 bis 19 wird ein Ausführungsbeispiel eines Spritzgießwerkzeuges gemäß der Erfindung erläutert, mit dem an ein Formteil 196 ein Rand 198 angespritzt werden soll. Im Ausführungsbeispiel handelt es sich bei dem Formteil 196 um eine Radlaufschale, also ein Kraftfahrzeugteil.

Erfindungsgemäß weist das Spritzgießwerkzeug ein Düsenteil 200 auf, von dem nachstehend näher zu beschreibende Formbacken und Verrieglungselemente ausgehen, ohne dass es eines gesonderten zu dem Düsenteil 200 verstellbaren und beabstandbaren Schließteils bedarf.

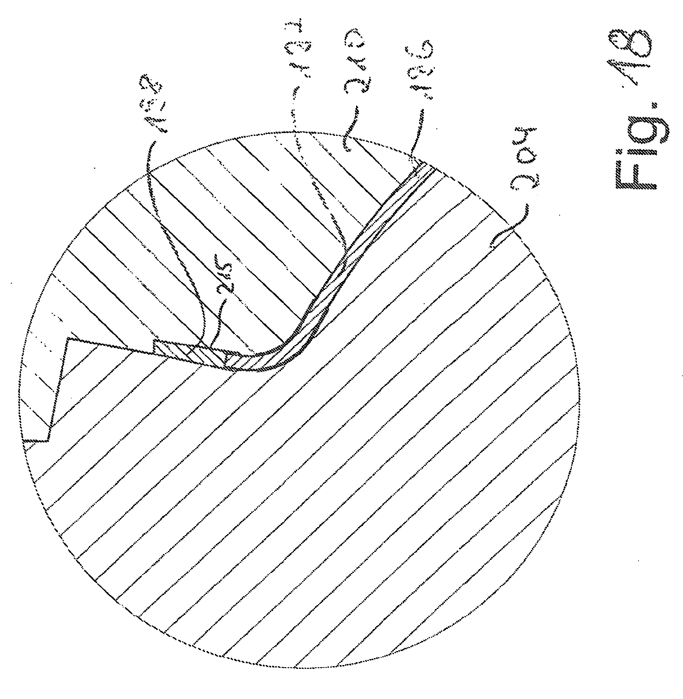

Das Düsenteil 200 weist einen Formträger 202 auf, auf dem ein als stationäre Formbacke ausgebildeter Formkern 204 (-auch konturkern genannt-) angeordnet ist, dessen Außenkontur der Innenkontur der Radlaufschale 196 in einem Umfang entspricht, dass der Bereich, an den der Rand 198 angespritzt werden soll, formschlüssig zwischen dem konturkern 204 und zu dem Konturkern verstellbaren Formbacken 206, 208, 210, 212, 214 aufgenommen wird. Dabei wird der in Fig. 18 mit dem Bezugszeichen 197 gekennzeichnete Bereich der Radlaufschale 196 derart zwischen demKonturkern 204 und den Formbacken 206, 208, 210, 212, 214 klemmend aufgenommen, dass beim Spritzen Kunststoff nicht aus dem zwischen dem Konturkern 204 und den Formbacken 206, 208, 210, 212, 214 umgebenen Formhohlraum 215 austreten kann, in dem der Rand 198 an das Formteil 196 angespritzt wird. Dabei wird der Rand 198 nicht nur stumpf an den Abschnitt 197 der Radlaufschale 196 angespritzt, sondern erstreckt sich abschnittsweise überlappend an den angrenzenden Längsseitenrändern des Abschnitts 197, wie prinzipiell der Fig. 18 zu entnehmen ist.

Zum Verstellen der Formbacken 206, 208, 210, 212, 214 gehen von dem Formträger 202 Kolbenzylindereinheiten 216, 218, 220, 222, 224 aus, die vorzugsweise hydraulisch betätigt werden.

Die Formbacken 206, 208, 210, 212, 214 sind quasi sternförmig um den Konturkern 204 angeordnet und zu diesem verstellbar, wobei in Schließstellung (Fig. 15, 16, 17,18) die Formbacken 206, 208, 210, 212, 214 in ihren hohlraumseitig verlaufenden Abschnitten bündig ineinander übergehen, so dass Kunststoff aus dem Hohlraum 215 nicht austreten kann.

Um die Formbacken 206, 208, 210, 212, 214 in der Spritzstellung zu verriegeln, ist jeder Formbacke 206, 208, 210, 212, 214 ein Verriegelungselement 226 in Form eines Schiebers zugeordnet, der ebenfalls über eine Kolbenzylinderanordnung 228 verstellbar ist, wobei bevorzugterweise ein Hydraulikzylinder zum Einsatz gelangt.

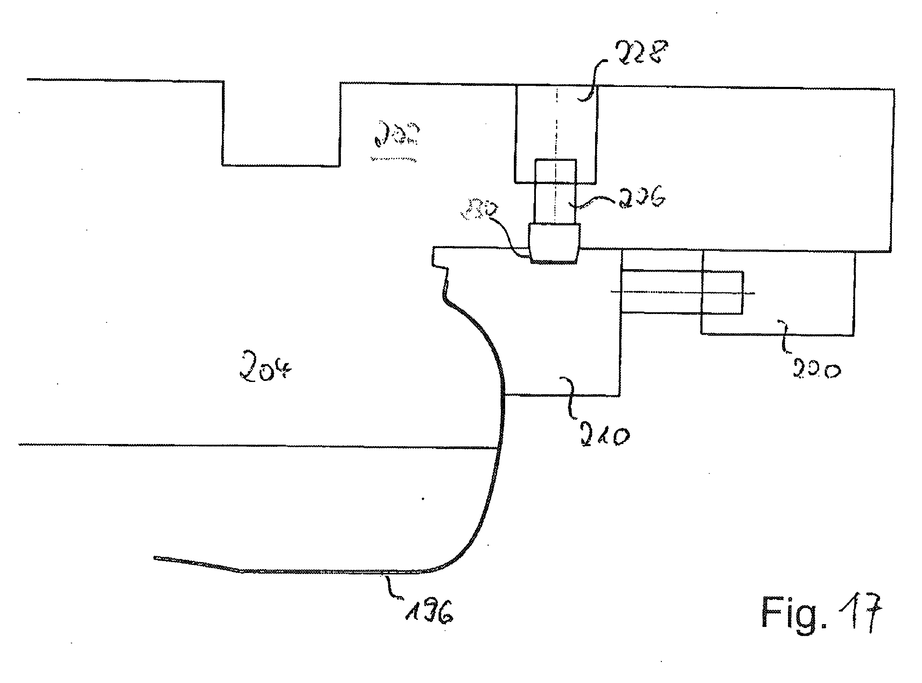

Der Schieber oder Verriegelungskolben 226 weist an seinem freien Ende einen quaderförmigen zur freien Stirnfläche sich verjüngenden Verriegelungsabschnitt auf, der bei in Spritzstellung befindlicher Formbacke 206, 208, 210, 212, 214 in eine entsprechende Ausnehmung 230 formschlüssig eingreift. Dies ergibt sich aus der Darstellung der Fig. 17. Ferner wird erkennbar, dass der Verstellweg jeder Formbacke 206, 208, 210, 212, 214 senkrecht zum Verstellweg des Verriegelungskolbens 226 verläuft, der seinerseits in dem Formträger 202 eingelassen ist und zum Verriegeln der Formbacke 206, 208, 210, 212, 214 dessen Oberfläche durchsetzt.

Durch die Anordnung des Konturkerns 204 und der zu diesen verstellbaren Formbacken 206, 208, 210, 212, 214 und der Verriegelungskolben 226 ist sichergestellt, dass auch dann, wenn der Druck in den Kolbenzylindereinheiten 216, 218, 220, 222, 224, 228 im Störfall abfallen sollte, die Formbacken 206, 208, 210, 212, 214 in der Spritzstellung verriegelt bleiben, da die Verriegelungskolben 226 schwerkraftbedingt in den Ausnehmungen 230 der Formbacken 206, 208, 210, 212, 214 verbleiben.

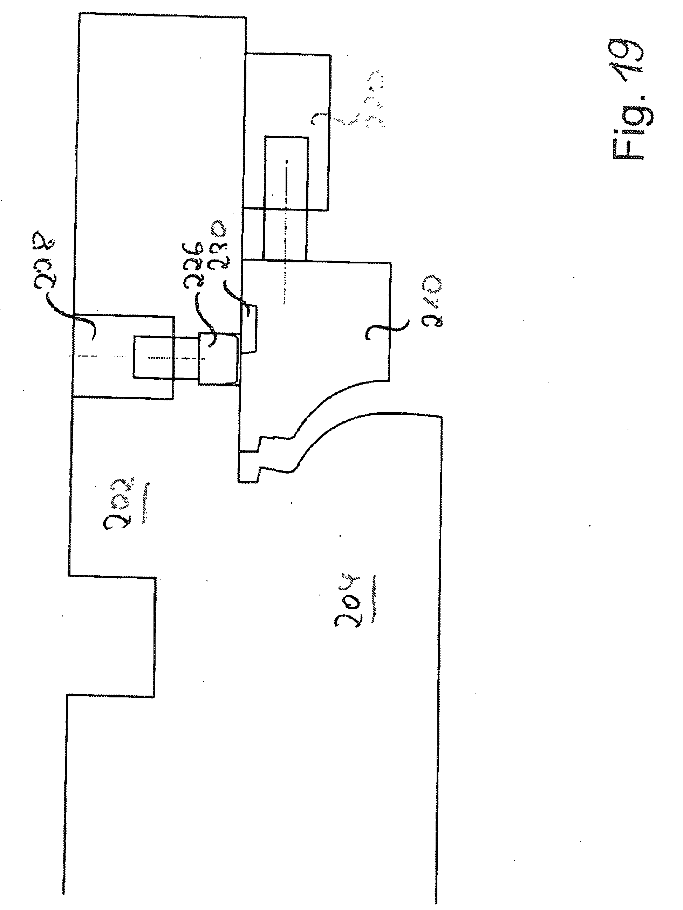

In Fig. 19 ist das Düsenteil 200 bei geöffnetem Werkzeug, also zu dem Konturkern 204 beabstandeten Formbacken 206, 208, 210, 212, 214 dargestellt. In dieser Position ist der Verriegelungskolben 226 zurückgezogen, so dass eine freie Beweglichkeit der Formbacken 206, 208, 210, 212, 214 ermöglicht wird.

Da die Verrieglung für die Formbacken 206, 208, 210, 212, 214 von dem Düsenteil 200 selbst ausgeht, kann das Formteil 196 - im Ausführungsbeispiel die Radlaufschale - ungehindert in das Werkzeug eingelegt bzw. aus diesem herausgenommen werden, wodurch auch hohe Taktzeiten erzielbar sind.

## Patentansprüche

1. Spritzgießwerkzeug zum Anspritzen eines Abschnitts an ein Formteils (196) und/oder Umpritzen eines Abschnitts eines Formteils, wie Kraftfahrzeugteil, insbesondere Radlaufschale oder Unterboden, mit einem Düsenteil (200), das zumindest zwei relativ zueinander verstellbare Formbacken (204, 206, 208, 210, 212, 214), die in Spritzstellung einen Hohlraum (215) begrenzen, in dem ein Spritzkanal mündet, sowie zumindest ein mit zumindest einer auf dem Düsenteil verstellbar angeordneten Formbacke wechselwirkendes Verriegelungs- oder Schließelement (226) zum Zuhalten der zumindest einen verstellbaren Formbacke in der Spritzstellung umfasst, wobei das zumindest eine Verriegelungs- oder Schließelement von dem Düsenteil ausgeht, zu diesem verstellbar ausgebildet ist und die zumindest eine verstellbare Formbacke in ihrer Spritzstellung verriegelt und eine der Formbacken ein Formkern (204) ist, der stationär von einem Formträger (202) des Düsenteils (200) ausgeht und zu dem Formkern zumindest eine Formbacke (206, 208, 210, 212, 214) verstellbar angeordnet ist,
**dadurch gekennzeichnet,**
**dass** das Verriegelungs- oder Schließelement (226) in Schließstellung der zumindest einen verstellbaren Formbacke (206, 208, 210, 212, 214) formschlüssig in diese eingreift.

2. Spritzgießwerkzeug nach Anspruch 1,
**dadurch gekennzeichnet,**
**dass** das Verriegelungs- oder Schließelement (226) in eine Ausnehmung (230) der zumindest einen verstellbaren Formbacke (206, 208, 210, 212, 214) eingreift.

3. Spritzgießwerkzeug nach Anspruch 1 oder 2,
**dadurch gekennzeichnet,**
**dass** der Verstellweg der zumindest einen Formbacke (206, 208, 210, 212, 214) quer, insbesondere senkrecht zum Verstellweg des Verriegelungs- oder Schließelementes (226) verläuft.

4. Spritzgießwerkzeug nach zumindest einem der vorhergehenden Ansprüche,
**dadurch gekennzeichnet,**
**dass** mehrere Formbacken (206, 208, 210, 212, 214) sternförmig oder in etwa sternförmig um den Konturkern (204) herum angeordnet sind und in Schließstellung in ihren hohlraumseitig verlaufenden Abschnitten bündig ineinander übergehen.

5. Spritzgießwerkzeug nach zumindest einem der vorhergehenden Ansprüche,
**dadurch gekennzeichnet,**
**dass** die zumindest eine zu dem Konturkern (204) verstellbare Formbacke (206, 208, 210, 212, 216) über einen mit dem Formträger (202) verbundenen ersten Druckzylinder (216, 218, 220, 222, 224) und/oder das Verriegelungs- oder Schließelement (226) über einen mit dem Formträger verbundenen zweiten Druckzylinder (228) verbunden ist.

6. Verfahren zum Anspritzen eines Abschnitts an ein Formteil (196) und/oder Umspritzen eines Abschnitts eines Formteils, wie Kraftfahrzeugteil, insbesondere Radlaufschale oder Unterboden, wobei das Formteil abschnittsweise in einen von relativ zueinander verstellbaren von einem Düsenteil (200) eines Spritzgießwerkzeuges ausgehenden Formbacken (204, 206, 208, 210, 212, 214), umgebenen Hohlraum (215) eingebracht wird, zumindest eine der Formbacken mittels zumindest eines von dem Düsenteil ausgehenden Schließelements (226) durch Verstellen dieses zu der zumindest einen Formbacke in ihrer Spritzstellung verriegelt wird und in den Hohlraum nach Schließen der Formbacken in der Spritzstellung fließfähige Material gespritzt wird,
**dadurch gekennzeichnet,**
**dass** das Formteil (196) auf einer der als stationär auf einem Formträger (202) des Düsenteils (200) angeordneter Formkern (204) ausgebildeten Formbacken angeordnet wird, zumindest eine Formbacke (206, 208, 210, 212, 214) zu dem Formkern zum Ausbilden des Hohlraums (215) verstellt wird
und sodann die zumindest eine zu dem Formkern verstellbare Formbacke durch formschlüssiges Eingreifen des Verriegelungs- oder Schließelementes (226) in diese verriegelt wird.

7. Verfahren nach Anspruch 6,
**dadurch gekennzeichnet,**
**dass** in den von dem Formkern (204) und der zumindest einen zu diesem verstellbaren Formbacke (206, 208, 210, 212, 214, 214) begrenzten Hohlraum (215) ein Rand (198) einer Radlaufschale als das Formteil (196) eingebracht wird.

## Claims

1. Injection tool for moulding of a section onto a moulded part (196) and/or coating of a section of a moulded part, such as a vehicle part, in particular a wheel arch shell or underbody, having a nozzle section (200) comprising at least two moulding jaws (204, 206, 208, 210, 212, 214) adjustable relative to one another, limiting in the injection position a cavity (215) in which an injection channel opens, and at least one locking or closing element (226) interacting with at least one moulding jaw adjustably arranged on the nozzle section for holding the at least one moulding jaw closed in the injection position, where the at least one locking or closing element extends from the nozzle section, is designed adjustable relative thereto and locks the at least one adjustable moulding jaw in its injection position, and one of the moulding jaws is a mould core (204) extending stationarily from a mould support (202) of the nozzle section (200) and at least one moulding jaw (206, 208, 210, 212, 214) is arranged adjustable relative to the mould core,
**wherein**
the locking or closing element (226) in the closing position of the at least one adjustable moulding jaw (206, 208, 210, 212, 214) engages positively in the latter.

2. Injection tool according to Claim 1,
**wherein**
the locking or closing element (226) engages in a recess (230) of the at least one adjustable moulding jaw (206, 208, 210, 212, 214).

3. Injection tool according to Claim 1 or 2
**wherein**
the adjustment travel of the at least one moulding jaw (206, 208, 210, 212, 214) runs transversely, in particular vertically to the adjustment travel of the locking or closing element (226).

4. Injection tool according to at least one of the preceding claims,
**wherein**
several moulding jaws (206, 208, 210, 212, 214) are arranged in a star shape or approximately in a star shape about the contour core (204) and in the closing position merge flush with one another in their sections on the cavity side.

5. Injection tool according to at least one of the preceding claims,
**wherein**
the at least one moulding jaw (206, 208, 210, 212, 216) adjustable relative to the contour core (204) is connected via a first pressure cylinder (216, 218, 220, 222, 224) connected to the mould support (202) and/or the locking or closing element (226) is connected via a second pressure cylinder (228) connected to the mould support.

6. Method for moulding of a section onto a moulded part (196) and/or coating of a section of a moulded part, such as a vehicle part, in particular a wheel arch shell or underbody, where the moulded part is inserted in some sections into a cavity (215) surrounded by moulding jaws (204, 206, 208, 210, 212, 214) adjustable relative to one another and extending from a nozzle section (200) of a injection tool, at least one of the moulding jaws is locked by at least one closing element (226) extending from the nozzle section by adjusting said element relative to the at least one moulding jaw in its injection position, and freeflowing material is injected into the cavity after closing of the moulding jaws in the injection position,
**wherein**
the moulded part (196) is arranged on one of the moulding jaws designed as a mould core (204) arranged stationarily on a mould support (202) of the nozzle section (200), at least one moulding jaw (206, 208, 210, 212, 214) is adjusted relatively to the mould core for formation of the cavity (215), and then the at least one moulding jaw adjustable relative to the mould core is locked by positive engagement therein of the locking or closing element (226).

7. Method according to Claim 6,
**wherein**
a rim (198) of a wheel arch shell is inserted as the moulded part (196) into the cavity (215) limited by the mould core (204) and the at least one moulding jaw (206, 208, 210, 212, 214) adjustable relative thereto.

## Revendications

1. Outil de moulage par injection pour l'injection d'une section sur une pièce moulée (196) et/ou l'enrobage par injection d'une section d'une pièce moulée, telle qu'une pièce automobile, en particulier un passage de roues ou dessous de caisse, avec une section de buse (200) qui comprend au moins deux éléments de moulage (204, 206, 208, 210, 212, 214) mobiles l'un par rapport à l'autre qui limitent une cavité (215) dans laquelle aboutit un canal d'injection, ainsi qu'au moins un élément de fermeture ou de verrouillage (226) agissant en interaction avec au moins un élément de moulage disposé de manière mobile sur la section de buse, permettant de maintenir fermé l'au moins un élément de moulage mobile dans la position d'injection, sachant que l'élément de fermeture ou de verrouillage au moins en présence part de la section de buse, est conçu de manière à pouvoir être déplacé par rapport à celle-ci et bloque l'élément de moulage mobile au moins en présence dans sa position d'injection, et qu'un des éléments de moulage est un noyau de moule (204), qui part de manière, fixe d'un support de moule (202) de la section de buse (200) et qu'au moins un élément de moulage (206, 208, 210, 212, 214) est disposé de manière à pouvoir être déplacé par rapport au noyau de moule,
**caractérisé en ce**
**que** l'élément de fermeture ou de verrouillage (226) s'engage par liaison de forme dans l'élément de moulage mobile (206, 208, 210, 212, 214) au moins en présence lorsque celui-ci est en position fermée.

2. Outil de moulage par injection selon la revendication 1,
**caractérisé en ce**
**que** l'élément de fermeture ou de verrouillage (226) s'engage dans un évidement (230) de l'élément de moulage mobile (206, 208, 210, 212, 214) au moins en présence.

3. Outil de moulage par injection selon la revendication 1 ou 2,
**caractérisé en ce**
**que** la course de déplacement de l'élément de moulage (206, 208, 210, 212, 214) au moins en présence s'étend transversalement, en particulier verticalement par rapport à la course de déplacement de l'élément de fermeture ou de verrouillage (226).

4. Outil de moulage par injection selon au moins l'une des revendications précédentes,
**caractérisé en ce**
**que** plusieurs éléments de moulage (206, 208, 210, 212, 214) sont disposés en forme d'étoile ou approximativement en forme d'étoile autour du noyau de moule (204) et, en position fermée, se prolongent les uns dans les autres par affleurement de leurs sections s'étendant du côté de la cavité.

5. Outil de moulage par injection selon au moins l'une des revendications précédentes,
**caractérisé en ce**
**que** l'au moins un élément de moulage (206, 208, 210, 212, 216) pouvant être déplacé par rapport au noyau de moule (204) est relié par l'intermédiaire d'un premier vérin (216, 218, 220, 222, 224) relié au support de moule (202) et/ou l'élément de fermeture ou de verrouillage (226) par l'intermédiaire d'un deuxième vérin (228) relié au support de moule.

6. Procédé pour l'injection d'une section sur une pièce moulée (196) et/ou l'enrobage par injection d'une section d'une pièce moulée, telle qu'une pièce automobile, en particulier un passage de roues ou dessous de caisse, sachant que la pièce moulée est en partie introduite dans une cavité (215) entourée d'éléments de moulage (204, 206, 208, 210, 212, 214) pouvant être déplacés les uns par rapport aux autres et partant d'une section de buse (200) d'un outil de moulage par injection, qu'au moins l'un des éléments de moulage est verrouillé au moyen d'un élément de fermeture (226) partant de la section de buse par déplacement de celui-ci par rapport à l'élément de moulage au moins en présence dans sa position d'injection, et que du matériau pouvant couler est injecté dans la cavité après fermeture des éléments de moulage dans la position d'injection,
**caractérisé en ce**
**que** la pièce moulée (196) est disposée sur un des éléments de moulage conçus sous forme de noyau de moule (204) disposé de manière fixe sur un support de moule (202) de la section de buse (200), qu'au moins un élément de moulage (206, 208, 210, 212, 214) est déplacé par rapport au noyau de moulage pour former une cavité (215), et que l'au moins un élément de moulage pouvant être déplacé par rapport au noyau de moule est ensuite verrouillé par engagement par liaison de forme de l'élément de fermeture ou de verrouillage (226) dans celui-ci.

7. Procédé selon la revendication 6,
**caractérisé en ce**
**qu'**un bord (198) d'un passage de roue est introduit en tant que pièce moulée (196) dans la cavité (215) délimitée par le noyau de moule (204) et l'au moins un élément de moulage (206, 208, 210, 212, 214) pouvant être déplacé par rapport au noyau de moule.
